(19) Europäisches Patentamt
European Patent Office
Office européen des brevets

(11) Veröffentlichungsnummer: **0 147 726**
**B1**

(12) # EUROPÄISCHE PATENTSCHRIFT

(45) Veröffentlichungstag der Patentschrift: **27.01.88**

(51) Int. Cl.⁴: **B 01 D 19/04**

(21) Anmeldenummer: **84115267.1**

(22) Anmeldetag: **12.12.84**

(54) **Entschäumer für wässrige Dispersionen und Lösungen von Kunstharzen.**

(30) Priorität: **02.01.84 DE 3400014**

(43) Veröffentlichungstag der Anmeldung: **10.07.85 Patentblatt 85/28**

(45) Bekanntmachung des Hinweises auf die Patenterteilung: **27.01.88 Patentblatt 88/4**

(84) Benannte Vertragsstaaten: **AT BE CH DE FR GB LI**

(56) Entgegenhaltungen:
**EP - A - 0 063 346**
**EP - A - 0 076 558**
**DE - A - 2 745 583**
**DE - A - 3 001 387**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Wuhrmann, Juan Carlos, Dr., Curieweg 8, D-4000 Düsseldorf (DE)**
Erfinder: **Müller, Heinz, Engelshöhe 48, D-5600 Wuppertal 13 (DE)**
Erfinder: **Brands, Karl-Dieter, Paul-Löbe-Strasse 36, D-4000 Düsseldorf 13 (DE)**
Erfinder: **Asbeck, Adolf, Am Langen Weiher 51, D-4000 Düsseldorf 13 (DE)**
Erfinder: **Heidrich, Jochen, Dr., Robert-Koch-Strasse 41, D-4019 Monheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Wässrige Kunstharzlösungen und Dispersionen, die zum Beispiel als Bindemittel für Druckfarben, Holz- und Metallacke sowie als Überzüge für Papier und Kunststoffe verwendet werden, basieren meist auf wasserlöslichen Alkydharzen, Polyacrylaten oder Polyestern. Als Alkydharze kommen solche mit Carboxylfunktionalität, wie mit Maleinsäure modifizierte Öle, ölmodifizierte Alkyde und ölfreie Polyester in Betracht, wobei neben der Neutralisationskomponente — meist einem Amin — häufig eine Cosolventkomponente anwesend ist. Bei Lacken auf Polyacrylatbasis handelt es sich um copolymere Acrylsäurederivate, die sowohl mit Melamin- oder Harnstoffharzen als auch mit Polyurethanen kombiniert sein können. Als Polyester eignen sich modifizierte ungesättigte Verbindungen in Emulsionsform.

Diese Bindemittelsysteme werfen, bedingt durch die Anwesenheit von Emulgatoren bzw. Salze bildenden Carboxylgruppern, bei der Herstellung und Applikation Schaumprobleme auf, die mit üblichen Entschäumern im allgemeinen nicht zu lösen sind. So erhält man bei Einsatz von herkömmlichen Alkylpolysiloxanen in Form von Emulsionen oder als Lösung in Kohlenwasserstoffen starke Oberflächenstörungen, die dem Fachmann als Krater, Fischaugen und Orangenschaleneffekte bekannt sind.

Andererseits sind die für derartige Zwecke brauchbaren bzw. speziell entwickelten Organopolysiloxane vergleichsweise teuer. Es ist daher wiederholt versucht worden, sie ganz oder teilweise durch preiswertere Schaumdämpfungsmittel zu ersetzen.

Soweit diese Mittel zusätzlich weitere bekannte Schaumdämpfungsmittel enthalten, zum Beispiel solche auf Basis von Mineralölen oder Esterölen auf Basis langkettiger linearer Fettsäuren, kann es aber trotz Zusatz von Emulgatoren zu Unverträglichkeiten mit dem Bindemittelsystem sowie Ausschwitzungen auf der Lackoberfläche kommen. Organische Lösungsmittel, wie niedermolekulare Glykole, Ketone oder Ester enthaltende Entschäumer besitzen den Nachteil, dass nach Trocknung der Lackapplikationen deutliche Restschäume in Form von Flächen- bzw. Mikroschaum verbleiben. Ausserdem weisen derartige Lösungsmittel vielfach einen niedrigen Flammpunkt auf und erfordern für den Transport sowie bei der Handhabung aufgrund kritischer MAK-Werte sowie toxischer Belastungen zusätzliche Sicherheitsmassnahmen. Aus den vorstehend genannten Gründen sind derartige Entschäumergemische für die erfindungsgemässen Zwecke nicht geeignet.

Aus der DE-AS 1 257 111 sind ferner Entschäumer bekannt, die aus Estern verzweigtkettiger Fettsäuren und verzweigtkettiger Monoalkohole bestehen. Sie eignen sich als Entschäumer in der Textil-, Waschmittel- und Nahrungsmittelindustrie sowie bei chemischen Umsetzungen und beim Destillieren. Eine Verwendung in wässrigen Kunstharzdispersionen wird nicht offenbart, und es lässt sich zeigen, dass die Wirkung dieser Ester bei Abwesenheit weiterer Schauminhibitoren für den genannten Zweck nicht ausreicht.

In der Patentanmeldung DE 3 013 391 ist ein silikonfreier Entschäumer beschrieben, der aus einem homogenen Gemisch kettenverzweigter, 18 bis 30 Kohlenstoffatome enthaltender, primärer Alkohole, insbesondere Guerbetalkohole und silanierter Kieselsäure im Verhältnis Alkohol zu Kieselsäure wie 100:2 bis 100:20 besteht. Der praktisch silikonfreie Entschäumer ist in erster Linie zur Einarbeitung in Wasch- und Reinigungsmittel bestimmt. Die Patentanmeldung DE 3 115 644 (& EP-A-63 346) vermittelt die Lehre, dass man die Wirkung dieses Entschäumers durch Vermischen mit Wachsen, wie Paraffin, Montanwachs oder Esterwachsen sowie Aufbringen auf einem wasserlöslichen, salzartigen Träger, wie Natriumtripolyphosphat, für den speziellen Anwendungszweck, nämlich den Einsatz in Wasch- und Reinigungsmitteln steigern kann. Die Verwendung derartiger Entschämergranulate in wässrigen Kunstharzdispersionen ist nicht offenbart. Für diesen Verwendungszweck wären die Entschäumer nach DE 3 115 644 im übrigen auf Grund ihres hohen Salzgehaltes ungeeignet.

Weiterhin sind aus DE 2 745 583 Schaumverhütungsmittel für wässrige Polymerdispersionen bekannt, die ein Gemisch aus 10 bis 95% an einer organischen Trägerflüssigkeit, z.B. eines Paraffinöls, 1 bis 5% eines synthetischen Hartparaffins mit einem Erstarrungsbereich von 90 bis 100°C, 0,5 bis 2% des Magnesiumsalzes einer Fettsäure, 0,5 bis 5% einer hydrophobierten Kieselsäure und 2 bis 20% eines nichtionogenen Emulgators besteht. Die Notwendigkeit, derartige Entschäumer durch Zusätze an Emulgatoren sowie Verdickungsmitteln (fettsauren Magnesiumseifen) stabilisieren zu müssen, stellt einen Nachteil dar, da diese nicht schaumdämpfend wirkenden Zusätze zu Unverträglichkeiten mit den wässrigen Lackdispersionen, insbesondere Glanzlacken führen können. Bei derartigen Glanzlacken können insbesondere auch sogenannte Mikroschäume zu erheblichen Störungen, nämlich Poren- und Kraterbildung sowie Glanzverlust führen. Solche Mikroschäume können sich beispielsweise beim Auftragen der Lackdispersion auf die zu beschichtende Oberfläche bilden. Wird ihre Entstehung nicht unterdrückt, beziehungsweise werden sie nicht vor dem Erhärten der Lackschicht zerstört, so kommt es zu der beschriebenen Ausbildung von Poren und Kratern.

Es wurde nun gefunden, dass sich Mittel der Zusammensetzung

a) 70 bis 98 Gewichtsprozent eines bei Raumtemperatur flüssigen, organischen Trägermaterials, bestehend aus einem Mineralöl sowie dessen Gemischen mit Alkoholen der Formel I

$$R^1—CH_2—CH_2—\underset{\displaystyle R^2}{\underset{|}{CH}}—CH_2—OH \qquad (I)$$

in der die gruppen $R^1$ und $R^2$ gleich oder verschieden sein können und Alkylreste mit 4 bis 16 Kohlenstoffatomen bedeuten und die Gesamtzahl der in dem Alkohol enthaltenen Kohlenstoffatome 16 bis 30 beträgt,

b) 0,2 bis 5 Gewichtsprozent eines mikrokristallinen Paraffinwachses mit einem Schmelzpunkt von 60° bis 95°C,

c) 0,5 bis 20 Gewichtsprozent Hartparaffin mit einem Schmelzpunkt von 40° bis 60°C,

d) 0,05 bis 5 Gewichtsprozent hydrophobierte feinteilige Kieselsäure,

e) gegebenenfalls 0,1 bis 10 Gewichtsprozent Weichparaffin mit einem Schmelzpunkt von 32° bis 42°C,

mit Vorteil als Entschäumer in wässrigen Lack- und Kunstharzdispersionen verwenden lassen.

Als Mineralöle (Komponente a) kommen aliphatische und alicyclische (naphthenische) Paraffinöle mit einem mittleren Molekulargewicht von 140 bis 250, einem Stockpukt von unter 10°C und einem Siedepunkt von über 180°C in Frage. Diese Mineralöle können teilweise ersetzt sein durch verzweigtkettige, primäre Alkohole der vorstehend angegebenen Formel I. Als geeignet haben sich insbesondere Guerbetalkohole erwiesen, die in bekannter Weise aus geradkettigen, gesättigten Alkoholen beziehungsweise Alkoholgemischen mit 6 bis 16 C-Atomen zugänglich sind, beispielsweise durch Erhitzen dieser Alkohole in Gegenwart von starken Alkalien. Es hat sich gezeigt, dass Schaumdämpfungsmittel, in denen die Komponente (a) aus einem Gemisch von Mineralöl und Alkoholen der Formel I besteht, in bestimmten Fällen eine höhere Wirkung besitzen. Als gut geeignet haben sich Gemische im Gewichtsverhältnis von 50:1 bis 1:1 erwiesen.

Vorzugsweise beträgt der Anteil der Komponente (a) 85 bis 97 Gewichtsprozent des Entschäumergemisches.

Als Komponente (b) kommen bekannte mikrokristalline Paraffinwachse in Frage, die einen Schmelzpunkt von 60 bis 95°C, vorzugsweise von 62 bis 90°C aufweisen. Derartige mikrokristalline Wachse sind zum Beispiel Bestandteil von Montanwachsen beziehungsweise hochschmelzenden Erdölfraktionen (Ceresin) und zeichnen sich durch einen Gehalt an verzweigten und cyclischen Paraffinen aus. Ihr Anteil beträgt 0,2 bis 5 Gewichtsprozent, vorzugsweise 0,5 bis 3 Gewichtsprozent.

Als Komponente (c) eignen sich übliche Paraffinkohlenwasserstoffe, die im Gegensatz zu den vorgenannten mikrokristallinen Wachsen ein mehr oder weniger ausgeprägtes Kristallisationsverhalten zeigen. Der Schmelzpunkt dieser allgemein als Hartparaffine bezeichneten Kohlenwasserstoffe liegt zwischen 40 und 60°C, vorzugsweise zwischen 42 und 56°C. Bezogen auf Entschäumergemisch beträgt ihr Anteil 0,5 bis 20 Gewichtsprozent, vorzugsweise 1 bis 10 Gewichtsprozent und insbesondere 1,5 bis 5 Gewichtsprozent.

Die Gesamtmenge der Komponenten (b) und (c) beträgt vorzugsweise mindestens 3 Gewichtsprozent und insbesondere 4 bis 10 Gewichtsprozent.

Die Komponente (d) besteht aus fernteiliger, hydrophobierter Kieselsäure und ist in Anteilen von 0,05 bis 5 Gewichtsprozent, vorzugsweise von 0,1 bis 3 Gewichtsprozent und insbesondere von 0,2 bis 2 Gewichtsprozent in dem Gemisch enthalten. Unter hydrophobierter, feinteiliger Kieselsäure versteht man eine mikrofeine, durch Fällung aus Silikatlösungen, insbesondere jedoch pyrogene Zersetzung von Siliciumtetrachlorid hergestellte Kieselsäure, die in bekannter Weise mit Organochlorsilanen umgesetzt wurde, so wie dies zum Beispiel in US 3 207 698 und US 3 388 073 beschrieben ist. Als Beispiel sei ein mit Trimethylchlorsilan oder Dimethyldichlorsilan umgesetztes pyrogenes Siliciumdioxid genannt, das üblicherweise eine Teilchengrösse von 5 bis 20 µm aufweist.

Ausser den unter (a) bis (d) genannten Komponenten können die Mittel als weiteren Mischungsbestandteil eine Komponente (e) enthalten, die aus einem Weichparaffin mit einem Schmelzpunkt von 32° bis 42°C, insbesondere von 35 bis 40°C besteht. Geeignete Weichparaffine sind unter der Bezeichnung Vaseline im Handel. Die Komponente (e) führt zu einer weiteren Steigerung der Entschäumerwirkung und kann in Anteilen von vorzugsweise 0,1 bis 10 Gewichtsprozent, insbesondere 0,2 bis 5 Gewichtsprozent anwesend sein.

Die Schaumdämpfungsmittel werden durch Homogenisieren der vorgenannten Komponenten, vorzugsweise unter Erwärmen auf Temperaturen zwischen 80 und 110°C erhalten, wobei es sich empfiehlt, die Komponente (a) vorzulegen und anschliessend die Komponenten (b) bis (e) zuzumischen. Das Gemisch ist lagerbeständig oder kann unmittelbar weiterverwendet werden.

Das Schaumdämpfungsmittel eignet sich hervorragend zur Schaumunterdrückung in Kunstharz-, Lack- und Farbstoffdispersionen, die zur Herstellung klarer beziehungsweise hochglänzender Formstücke, Lacke und Beschichtungen bestimmt sind. Die Einsatzmengen an Schauminhibitor betragen in derartigen Zubereitungen 0,01 bis 1,5 Gewichtsprozent, vorzugsweise 0,05 bis 1 Gewichtsprozent. Die Schauminhibitoren sind hochwirksam und beeinträchtigen trotz der Anwesenheit von hydrophober Kieselsäure nicht den Glanz. Sie unterbinden insbesondere zuverlässig die Bildung störender Mikroschäume. Glanzfarben mit dem eingearbeiteten Entschäumer sind lagerstabil. Ihre Wirkung ist etwa denen bekannter, hochwirksamer Silikonentschäumer vergleichbar, übertreffen sie jedoch hinsichtlich ihrer Verträglichkeit mit Glanzlack-Zubereitungen, da sie nicht zu Entmischungen und Trübungen in den applizierten Lackschichten führen.

*Beispiele*

I. *Herstellung der Entschäumer*

Zwecks Herstellung homogener Gemische wurden die in der Tabelle 1 aufgeführten Bestandteile in der Weise verarbeitet, dass in das auf 80°C erwärmte Mineralöl die aufgeschmolzenen Paraffinwachse beziehungsweise der verzweigtkettige Alkohol sowie die silanierte Kieselsäure (d) unter intensiveren Rühren eingegeben wurden. Das Durchmischen wurde bis zum Abkühlen auf Raumtemperatur fortgesetzt.

Als Mineralöl wurde ein naphthenisches Paraffinöl mit einem Stockpunkt unter 5°C eingesetzt. Der verzweigtkettige Alkohol war durch Querbetisierung von technischem Decanol-1 hergestellt worden und bestand im wesentlichen aus 2-Octyl-dodecanol. Der Schmelzpunkt des mikrokristallinen Paraffins betrug 92° bis 94°C, des Hartparaffins 42° bis 44°C und der Vaseline 36° bis 39°C. Die silanierte Kieselsäure wies eine mittlere Teilchengrösse von 15 µm auf und war durch Umsetzung von pyrogener Kieselsäure mit Dimethylchlorsilan erhalten worden.

TABELLE 1

| Bestandteil (Gew.-%) | Beispiel 1 | 2 | 3 | 4 | 5 |
|---|---|---|---|---|---|
| Mineralöl | 90,0 | 90,0 | 95,0 | 90,0 | 83,0 |
| Alkohol I | — | — | — | 5,0 | 10,0 |
| Mikrowachs | 4,4 | 4,4 | 0,5 | 2,2 | 1,5 |
| Paraffin | 3,4 | 4,1 | 3,5 | 1,7 | 3,5 |
| Vaseline | 1,0 | — | — | 0,5 | 0,5 |
| silaniertes $SiO_2$ | 1,2 | 1,5 | 1,0 | 1,1 | 1,5 |

Zum Vergleich wurden die in Tabelle 2 aufgeführten, bekannten Rezepturen getestet beziehungsweise ohne Entschäumerzusatz gearbeitet (Versuch V 5).

TABELLE 2

| Bestandteil Gew.-%) | Vergleich $V_1$ | $V_2$ | $V_3$ | $V_4$ |
|---|---|---|---|---|
| Mineralöl | 90 | 89 | 88 | 86 |
| Alkohol I | — | — | — | — |
| Paraffin (SP 42-44° | — | 5 | — | — |
| Esterwachs | — | — | 5 | — |
| Polydimethylsiloxan | — | 4 | 4 | 4 |
| silaniertes $SiO_2$ | 10 | 2 | 2 | 10 |
| Emulgator (Nonylphenol-EO) | — | — | 1 | — |

Die homogenisierten Entschäumer erwiesen sich auch nach 6- bis 10wöchiger Lagerung bei Raumtemperatur (22 °C) als völlig stabil.

II. *Anwendungstechnische Prüfung*

Zwecks anwendungstechnischer Prüfung wurden die Entschäumer in folgende Glanzlack-Dispersion eingearbeitet (Angaben in Gewichtsteilen = T).

504 T Acrylpolymer-Dispersion (50 Gewichtsprozent Wasser)
74 T Propylenglykol
2 T Natriumpolyacrylat
252 T Titandioxid
81 T Ammoniumpolyacrylat-Lösung (97,5 Gewichtsprozent $H_2O$)
8 T Konservierungsmittel
17 T 2,2,4-Trimethylpentan-1,2-diol-diisobutyrat
30 T Wasser
1 T Entschäumer gemäss Beispiel 1 bis 5.

Mit dem hergestellten Dispersionslack wurden folgende anwendungstechnische Prüfungen durchgeführt.

a) *Prüfung der fertigen Farbe*

Unmittelbar nach der Herstellung der Dispersionsfarbe werden 80 T der Farbe mit 20 T Wasser gemischt und jeweils 1 Minute bei 2.000 Upm mit einem Dissolver (Dispergierscheibe Ø 40 mm) gerührt. Mit diesem Gemisch wird ein tarierter Standzylinder bis zur 50 ml-Marke gefüllt und das Gewicht dieser Flüssigkeitsmenge bestimmt. Je höher das Gewicht der Probe, um so niedriger ist der Luftgehalt, um so besser also die Wirkung des Entschäumers. Angegeben wird der prozentuale Lufteinschluss, bezogen auf eine schaumfreie (ideale) Dispersion.

b) *Rakeltest auf Glasplatten*

Die Durchführung erfolgt mittels eines Filmziehgerätes. Die entschäumerhaltige Dispersion wird mit in den Rahmen der Rakel gegossen, welcher anschliessend mit gleichmässiger Geschwindigkeit über eine plane Oberfläche gezogen wird. Der entstandene Film (200 µm) trocknet an der Luft ab und wird anschliessend auf Lufteinschluss (Mikroschaum) und Verlaufs- beziehungsweise Silikonstörungen beurteilt. Nach 24 Stunden wurde zusätzlich eine Glanzmessung der Oberfläche (nach GARDNER) durchgeführt.

c) *Test mit der Lammfellrolle (auf Glasplatten)*

Nach der Herstellung der Dispersionsfarbe werden

80 T Farbe mit
20 T wasser

gemischt und 1 Minute bei 2.000 Upm mit einem Dissolver gerührt. Anschliessend wird die Probe mit Hilfe einer Anstrichrolle (Lammfellrolle) auf eine sorgfältig gereinigte Glasplatte aufgetragen. Nach dem Trocknen wird der Anstrich auf Lufteinschlüsse (Blasenbildung) visuell beurteilt.

d) *Test mit der Schwammwalze (auf Hartfaserplatten)*

Hartfaserplatten der Grösse 20 × 30 × 0,4 cm werden auf der glatten Seite mit einer 1:1 verdünnten Kunststoffdispersion durch Pinselauftrag abgesperrt. Nun werden 60 bis 70 g Farbe auf diese Platte gegeben und mit einer Schwammwalze so gleichmässig verteilt, dass 15 g nasser Farbe (= 250 $g/m^2$) verbleiben.

Die verwendete Schwammwalze mit einer Breite von 6 cm und einem Durchmesser von 7 cm besteht aus offenporigem Polyurethanschaum. Die Verwendung einer solchen Walze bringt den Vorteil, dass nicht nur die in der Farbe eingeschlossenen Schaumbläschen beurteilt werden, sondern zusätzlich Luft in den Anstrich eingearbeitet wird, wie dies bei der Pinselapplikation, wenn auch in geringerem Masse, gegeben ist.

Die trockenen Anstriche werden nach folgender Vergleichsskala beurteilt:

1 = sehr starker Lufteinschluss
2 = starker Lufteinschluss
3 = mässiger Lufteinschluss
4 = wenig Lufteinschluss
5 = sehr wenig Lufteinschluss
6 = kein Lufteinschluss

Die Ergebnisse sind in Tabelle 3 zusammengestellt. Sie belegen die Überlegenheit der erfindungsgemässen Mittel.

TABELLE 3

| Beispiel | Lufteinschluss (Gew.-%) | Rakeltest Einschlüsse (Note) | Glanz % | Applikation Glas (Note) | Hartfaser (Note) |
|---|---|---|---|---|---|
| 1 | 13,2 | 3-4 | 56 | 4 | 5 |
| 2 | 13,5 | 3-4 | 53 | 3-4 | 4-5 |
| 3 | 14,0 | 3-4 | 56 | 4 | 5 |
| 4 | 13,5 | 3-4 | 57 | 4 | 5 |
| 5 | 13,2 | 3-4 | 52 | 3-4 | 4-5 |
| $V_1$ | 14,6 | 3 | 38 | 3 | 3 |
| $V_2$ | 14,0 | 3 | 43 | 3 | 3-4 |
| $V_3$ | 14,0 | 3 | 42 | 3 | 4 |
| $V_4$ | 14,2 | 3 | 37 | 3 | 3-4 |
| $V_5$ | 18,0 | 2 | 24,6 | 2 | 2 |

**Patentansprüche**

1. Verwendung eines Mittels der Zusammensetzung

a) 70 bis 98 Gewichtsprozent eines bei Raumtemperatur flüssigen, organischen Trägermaterials, bestehend aus einem Mineralöl sowie dessen Gemischen mit Alkoholen der Formel I

$$R^1—CH_2—CH_2—\underset{\displaystyle R^2}{\underset{|}{CH}}—CH_2—OH \qquad (I)$$

in der die Gruppen $R^1$ und $R^2$ gleich oder verschieden sein können und Alkylreste mit 4 bis 16 Kohlenstoffatomen bedeuten und die Gesamtzahl der in dem Alkohol enthaltenen Kohlenstoffatome 16 bis 30 beträgt,

b) 0,2 bis 5 Gewichtsprozent eines mikrokristallinen Paraffinwachses mit einem Schmelzpunkt von 60° bis 95°C,

c) 0,5 bis 20 Gewichtsprozent Hartparaffin mit einem Schmelzpunkt von 40° bis 60°C,

d) 0,05 bis 5 Gewichtsprozent hydrophobierte feinteilige Kieselsäure,

e) gegebenenfalls 0,1 bis 10 Gewichtsprozent Weichparaffin mit einem Schmelzpunkt von 32° bis 42°C,

als Entschäumer in wässrigen Lack- und Kunstharzdispersionen.

2. Verwendung eines Mittels nach Anspruch 1, worin die Komponente (a) aus einem Gemisch aus Mineralöl und Alkoholen der Formel I im Gewichtsverhältnis 50:1 bis 1:1 besteht.

3. Verwendung eines Mittels nach Anspruch 1, worin der Anteil der Komponente (b) 0,5 bis 3 Gewichtsprozent beträgt.

4. Verwendung eines Mittels nach Anspruch 1, worin der Anteil der Komponente (c) 1 bis 10 Gewichtsprozent beträgt.

5. Verwendung eines Mittels nach Anspruch 1, 3 und 4, worin der Anteil der Komponenten (b) und (c) insgesamt 4 bis 10 Gewichtsprozent beträgt.

6. Verwendung eines Mittels nach Anspruch 1, worin der Anteil der Komponente (d) 0,1 bis 3 Gewichtsprozent beträgt.

7. Verwendung eines Mittels nach Anspruch 1 und 6, enthaltend 0,2 bis 5 Gewichtsprozent eines Weichparaffins vom Schmelzpunkt 35° bis 40°C.

8. Verwendung des Mittels nach Anspruch 1 bis 7 in Einsatzmengen von 0,01 bis 1,5 Gewichtsprozent.

**Claims**

1. The use of an agent having the following composition:

a) from 70 to 98% by weight of an organic carrier material which is liquid at room temperature, consisting of a mineral oil and mixtures thereof with alcohols corresponding to the following formula

$$R^1—CH_2—CH_2—\underset{\displaystyle R^2}{\underset{|}{CH}}—CH_2—OH \qquad (I)$$

in which $R^1$ and $R^2$ may be the same or different and represent $C_4$-$C_{16}$ alkyl radicals and the total number of carbon atoms in the alcohols amounts to between 16 and 30,

b) from 0.2 to 5% by weight of a microcrystalline paraffin wax having a melting point of from 60 to 95°C,

c) from 0.5 to 20% by weight of hard paraffin having a melting point of from 40 to 60°C,

d) from 0.05 to 5% by weight of hydrophobicized finely divided silica,

e) optionally from 0.1 to 10% by weight of soft paraffin having a melting point of from 32 to 42°C, as foam inhibitor in aqueous lacquer and synthetic resin dispersions.

2. The use of an agent as claimed in Claim 1 in which component (a) consists of a mixture of mineral oil and alcohols of formula I in a ratio by weight of from 50:1 to 1:1.

3. The use of an agent as claimed in Claim 1 in which the proportion of component (b) amounts to between 0.5 and 3% by weight.

4. The use of an agent as claimed in Claim 1 in which the proportion of component (c) amounts to between 1 and 10% by weight.

5. The use of an agent as claimed in Claims 1, 3 and 4 in which the proportion of components (b) and (c) amounts in all to between 4 and 10% by weight.

6. The use of an agent as claimed in Claim 1 in which the proportion of component (d) is from 0.1 to 3% by weight.

7. The use of an agent as claimed in Claim 1 to 6 containing from 0.2 to 5% by weight of a soft wax having a melting point of from 35 to 40°C.

8. The use of the agent claimed in Claim 1 to 7 in quantities of from 0.01 to 1.5% by weight.

**Revendications**

1. Utilisation, comme agent antimousse dans des dispersions aqueuses de vernis et de résines synthétiques, d'un agent ayant la composition suivante:

a) 70 à 98% en poids d'une matière support organique liquide à la température ambiante, constituée d'une huile minérale, ainsi que de ses mélanges avec des alcools de formule I:

$$R^1—CH_2—CH_2—\underset{\underset{R^2}{|}}{CH}—CH_2—OH \qquad (I)$$

dans laquelle les groupes $R^1$ et $R^2$ peuvent être identiques ou différents et représentent des radicaux alkyle contenant 4 à 16 atomes de carbone, le nombre total des atomes de carbone contenus dans l'alcool étant de 16 à 30,

b) 0,2 à 5% en poids d'une cire paraffinique microcristalline ayant un point de fusion de 60 à 95°C,

c) 0,5 à 20% en poids de paraffine dure ayant un point de fusion de 40 à 60°C,

d) 0,05 à 5% en poids d'acide silicique finement divisé rendu hydrophobe,

e) éventuellement 0,1 à 10% en poids de paraffine molle ayant un point de fusion de 32 à 42°C.

2. Utilisation d'un agent selon la revendication 1, dans laquelle le composant (a) est constitué d'un mélange d'une huile minérale et d'alcools de formule I dans le rapport pondéral de 50:1 à 1:1.

3. Utilisation d'un agent selon la revendication 1, dans laquelle la quantité du composant (b) s'élève à 0,5-3% en poids.

4. Utilisation d'un agent selon la revendication 1, dans laquelle la quantité du composant (c) s'élève à 1-10% en poids.

5. Utilisation d'un agent selon les revendications 1, 3 et 4, dans laquelle la quantité des composants (b) et (c) s'élève, au total, à 4-10% en poids.

6. Utilisation d'un agent selon la revendication 1, dans laquelle la quantité du composant (d) s'élève à 0,1-3% en poids.

7. Utilisation d'un agent selon les revendications 1 et 6, cet agent contenant 0,2 à 5% en poids d'une paraffine molle d'un point de fusion de 35 à 40°C.

8. Utilisation de l'agent selon les revendications 1 à 7 en quantités de 0,01 à 1,5% en poids.